(19) Europäisches Patentamt
European Patent Office
Office européen des brevets

(11) **EP 4 186 935 A1**

(12) **EUROPÄISCHE PATENTANMELDUNG**

(43) Veröffentlichungstag:
**31.05.2023   Patentblatt 2023/22**

(21) Anmeldenummer: **21211188.4**

(22) Anmeldetag: **29.11.2021**

(51) Internationale Patentklassifikation (IPC):
*C08G 18/18* (2006.01)    *C08G 18/48* (2006.01)
*C08G 18/72* (2006.01)    *C08J 9/14* (2006.01)
*C08K 5/54* (2006.01)    *C08L 75/04* (2006.01)
*C08L 75/08* (2006.01)    *C08G 101/00* (2006.01)

(52) Gemeinsame Patentklassifikation (CPC):
**C08G 18/4804; C08G 18/18; C08G 18/4829;
C08G 18/72; C08J 9/141; C08J 9/146; C08J 9/149;
C08K 5/54; C08L 75/04; C08L 75/08;**
C08G 2101/00; C08G 2110/00; C08G 2130/00;
C08J 2203/14; C08J 2203/162;         (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
• **Scholz, Roger**
**52538 Selfkant-Süsterseel (DE)**

• **Rojo-Wiechel, Elena**
**53111 Bonn (DE)**
• **Albers, Reinhard**
**51375 Leverkusen (DE)**
• **Ritter, Eric**
**51065 Köln (DE)**
• **Tadjbach, Sascha**
**51469 Bergisch Gladbach (DE)**
• **Loof, Michael**
**51371 Leverkusen (DE)**

(74) Vertreter: **Levpat**
**c/o Covestro AG**
**Gebäude K12**
**51365 Leverkusen (DE)**

(54) **GEGENÜBER ISOCYANATEN REAKTIVE ZUSAMMENSETZUNGEN MIT HOHEM TREIBMITTELANTEIL**

(57)   Die Erfindung betrifft gegenüber Isocyanaten reaktive Zusammensetzungen mit hohem Treibmittelanteil, ihre Verwendung zur Herstellung von Polyurethan-schaumstoffen und Verfahren zur Herstellung von Polyurethanschaumstoffen unter ihrer Verwendung.

(52) Gemeinsame Patentklassifikation (CPC): (Forts.)
C08J 2203/182; C08J 2203/202; C08J 2375/08

**Beschreibung**

Die vorliegende Erfindung betrifft eine gegenüber Isocyanaten reaktive Zusammensetzung zur Herstellung von Polyurethanschaumstoffen umfassend ein Treibmittelgemisch umfassend ein halogeniertes Olefin und ein Co-Treibmittel.

Die Reaktion von gegenüber Isocyanaten reaktiven Zusammensetzungen mit Isocyanaten zur Herstellung von Urethanen wie der Einsatz von Polyisocyanaten und Verbindungen mit wenigstens zwei gegenüber Isocyanaten reaktiven Wasserstoffatomen ("Zerewitinoff-aktiven Wasserstoffatomen") in der gegenüber Isocyanaten reaktiven Zusammensetzung zur Herstellung von Polyurethanen sind lange bekannt. Durch geeignete Reaktionsbedingungen und Anwendung eines Treibmittels können Polyurethanschaumstoffe erhalten werden. Beispiele solcher Polyurethanschaumstoffe sind geschlossenzellige Polyurethanschaumstoffe, die zu Isolierungszwecken z.B. in Kühlschränken eingesetzt werden können.

Treibmittel werden grundsätzlich in chemische Treibmittel wie $H_2O$, die durch Reaktion mit Isocyanat $CO_2$ freisetzen, und physikalische Treibmittel wie kleine Kohlenwasserstoffmoleküle, halogenierte Kohlenwasserstoffe oder halogenierte Olefine, die selbst im Laufe der Polyurethanreaktion gasförmig vorliegen, unterschieden.

Die Verwendung von Treibmittelgemischen bei der Herstellung von Polyurethanschaumstoffen ist grundsätzlich bekannt.

WO 2007/002703 offenbart Treibmittelgemische umfassend 1,1,1,3-Tetrafluorpropen und Cyclopentan, offenbart jedoch keine genauen Zusammensetzungen von dieses Treibmittelgemisch umfassenden gegenüber Isocyanaten reaktiven Zusammensetzungen.

WO 2013/081809 offenbart Treibmittelgemische umfassend Z-1,1,1,4,4,4-Hexafluor-2-buten und Cyclopentan, die in Polyolformulierungen eingesetzt werden, wobei die Gesamtmenge an Treibmittelgemisch in dieser Polyolformulierung die Menge an in Vergleichsversuchen eingesetztem Treibmittel aus reinem Z-1,1,1,4,4,4-Hexafluor-2-buten in dieser Polyolformulierung nicht überschreitet.

AU 2016200022 offenbart Schaumstoffformulierungen umfassend 1,1,1,4,4,4-Hexafluor-2-buten und weitere Treibmittel, z.B. Cyclopentan umfassende Azeotrope oder azeotropähnliche Mischungen. Die Schaumstoffformulierungen umfassen weniger als 20 Gew.-% Treibmittelgemisch. Beim Vergleich von gegenüber Isocyanaten reaktiven Zusammensetzungen- bzw. diese Zusammensetzungen enthaltenden Polyurethanreaktivformulierungen, die halogenierte Olefine als Treibmittel enthalten, mit solchen, die Kohlenwasserstoffe als Treibmittel enthalten, fällt auf, dass im Allgemeinen höhere Gewichtsanteile der halogenierten Olefine verwendet werden müssen, um vergleichbares Fließverhalten der Zusammensetzungen und Formulierungen und vergleichbare Rohdichten im resultierenden Schaumstoff zu erzielen. Problematisch ist hierbei, dass die halogenierten Olefine maximale Löslichkeiten in gegenüber Isocyanaten reaktiven Zusammensetzungen aufweisen, so dass aus diesem Grund teilweise das erwünschte Fließverhalten oder die erwünschte Rohdichte nicht erzielt werden kann.

Aus diesem Grund hat die vorliegende Erfindung sich die Aufgabe gestellt, ein Treibmittel bereitzustellen, das die genannten Nachteile des Standes der Technik überwindet.

Überraschenderweise wurde gefunden, dass bei Verwendung eines Treibmittelgemischs aus halogeniertem Olefin und einem Co-Treibmittel ein größerer Gewichtsanteil Treibmittelgemisch in einer gegenüber Isocyanaten reaktiven Zusammensetzung gelöst werden kann als wenn man das halogenierte Olefin oder das Co-Treibmittel separat als Treibmittel in der gegenüber Isocyanaten reaktiven Zusammensetzung verwendet.

Gelöst wurde die Aufgabe also durch eine gegenüber Isocyanaten reaktive Zusammensetzung B zur Herstellung von Polyurethanschaumstoffen umfassend

- eine Verbindung B1 mit wenigstens zwei gegenüber Isocyanaten reaktiven Wasserstoffatomen
- ein Treibmittelgemisch B2 umfassend

 i. ein halogeniertes Olefin mit einer bei einer Temperatur von 25 °C maximalen Löslichkeit in B von $L_{HalO,25}$,
 ii. ein Co-Treibmittel mit einer bei einer Temperatur von 25 °C maximalen Löslichkeit in B von $L_{CoT,25}$, sowie
 iii. gegebenenfalls weitere Treibmittel B2n mit bei einer Temperatur von 25 °C jeweils maximalen Löslichkeiten in B von $L_{B2n,25}$,

wobei der Massenanteil des Treibmittelgemischs B2 an der Zusammensetzung B bei einer Temperatur von 25 °C größer ist als der Maximalwert der maximalen Löslichkeiten bei einer Temperatur von 25 °C des halogenierten Olefins, des Co-Treibmittels sowie gegebenenfalls der weiteren Treibmittel B2n.

Gegenstand der Erfindung ist also eine gegenüber Isocyanaten reaktive Zusammensetzung B, aus deren Reaktion mit Isocyanaten, insbesondere Polyisocyanaten mit wenigstens zwei Isocyanatgruppen, Polyurethanschaumstoffe erhältlich sind. Diese Zusammensetzung B umfasst wenigstens eine Verbindung B1 und ein Treibmittelgemisch B2, wobei die Verbindung B1 wenigstens zwei gegenüber Isocyanaten reaktive Wasserstoffatome aufweist, zum Beispiel wenigstens eine Aminogruppe oder wenigstens zwei Hydroxygruppen, wobei auch Verbindungen mit Amino- und Hydroxygruppen denkbar sind. Bei dem Treibmittelgemisch handelt es sich um eine Mischung aus wenigstens zwei Treibmitteln, nämlich einem halogenierten Olefin und einem Co-Treibmittel, wobei gegebenenfalls weitere Treibmittel B2n vom Treibmittelgemisch umfasst sein können. Jedes der vom Treibmittelgemisch umfassten Treibmittel weist eine individuelle maximale Löslichkeit in der gegenüber Isocyanaten reaktiven Zusammensetzung B von $L_{Treibmittel,\theta}$ auf, wobei "Treibmittel" für das jeweilige Treibmittel und "$\theta$" für die Temperatur in °C steht: das halogenierte Olefin, das Co-Treibmittel und gegebenenfalls das weitere Treibmittel B2n weisen somit bei 25 °C eine maximale Löslichkeit in B von $L_{HalO,25}$ bzw. $L_{CoT,25}$ bzw. gegebenenfalls $L_{B2n,25}$ auf. Erfindungsgemäß ist der Massenanteil des gesamten Treibmittelgemischs B2 an der Zusammensetzung B größer als der Maximalwert der maximalen Löslichkeiten der Bestandteile des Treibmittelgemischs, d.h. größer als die maximale Löslichkeit des am besten in B löslichen Treibmittels, wobei alle maximalen Löslichkeiten und der Massenanteil von B2 an B wieder auf eine Temperatur von 25 °C bezogen sind.

Im Sinne dieser Erfindung handelt es sich bei der maximalen Löslichkeit eines Bestandteils B2n des Treibmittelgemischs B2 bei 25 °C in einer gegenüber Isocyanaten reaktiven Zusammensetzung B um die maximale Löslichkeit, die der Bestandteil B2n bei 25 °C in der gegenüber Isocyanaten reaktiven Zusammensetzung B hat, wenn kein anderer Bestandteil des Treibmittelgemischs B2 vorliegt.

Im Sinne dieser Erfindung beziehen sich Mengenangaben, sofern nichts anderes angegeben ist, auf den Massenanteil in Gew.-%.

Im Sinne dieser Erfindung beziehen sich alle Werte für Massenanteile und Löslichkeiten, im speziellen maximale Löslichkeiten, auf bei einer Temperatur von 25 °C ermittelte Werte.

Beispielsweise handelt es sich also bei der maximalen Löslichkeit von Cyclopentan bei 25 °C in einem Polyol um den Massenanteil von Cyclopentan, der sich ohne Phasenseparation in dem Polyol lösen lässt. Für ein Treibmittelgemisch aus einem halogenierten Olefin und einem Co-Treibmittel lassen sich die maximalen Löslichkeiten des halogenierten Olefins und des Co-Treibmittels in einem Polyol bestimmen. Erfindungsgemäß weist das Gemisch aus Polyol und Treibmittelgemisch, das heißt die gegenüber Isocyanaten reaktive Zusammensetzung, einen Massenanteil des Treibmittelgemischs auf, der größer ist als die maximale Löslichkeit des halogenierten Olefins und des Co-Treibmittels.

Die Bestimmung einer maximalen Löslichkeit erfolgt im Sinne dieser Erfindung wie im weiteren Verlauf der Beschreibung dargestellt.

Im Sinne dieser Erfindung kann es sich bei dem halogenierten Olefin um ein einzelnes halogeniertes Olefin, eine Mischung von Diastereomeren eines einzelnen halogenierten Olefins, eine Mischung verschiedener Olefine oder eine Mischung von Diastereomeren verschiedener Olefine handeln. Bevorzugt handelt es sich um eine Mischung, insbesondere bevorzugt um eine Mischung aus Diastereomeren eines einzelnen halogenierten Olefins.

Gleichermaßen kann es sich bei einem Kohlenwasserstoff im Sinne dieser Anmeldung um einen einzelnen Kohlenwasserstoff oder um eine Mischung aus Kohlenwasserstoffen, zum Beispiel unterschiedlicher Isomere oder von Homologen handeln.

Prinzipiell sind als weiteres Treibmittel B2n die dem Fachmann bekannten Treibmittel, die nicht dem halogenierten Olefin und dem Co-Treibmittel entsprechen, verwendbar, beispielsweise Wasser oder halogenierte Alkane.

In einer Ausführungsform beträgt der Massenanteil des halogenierten Olefins und des Co-Treibmittels, das heißt der Summe der Massenanteile des halogenierten Olefins und des Co-Treibmittels, an dem Treibmittelgemisch wenigstens 50%, bevorzugt wenigstens 70%, mehr bevorzugt wenigstens 90%.

In einer weiteren Ausführungsform beträgt das Verhältnis der Massen des halogenierten Olefins $m_{HalO}$ und des Co-Treibmittels $m_{CoT}$ im Treibmittelgemisch B2 $m_{HalO}:m_{CoT}$ = 1,0:10,0 bis 10,0:1,0, vorzugsweise 1,0:5,0 bis 5,0:1,0, mehr bevorzugt 1,0:3,0 bis 3,0:1,0, am meisten bevorzugt 1,0:2,0 bis 2,0:1,0 oder 1,0:1,5 bis 1,5:1,0.

In einer bevorzugten Ausführungsform handelt es sich bei dem Co-Treibmittel um einen Kohlenwasserstoff oder eine Mischung aus Kohlenwasserstoffen, insbesondere um einen Kohlenwasserstoff mit 4, 5 oder 6 C-Atomen oder eine Mischung aus Kohlenwasserstoffen mit 4, 5 oder 6 C-Atomen. Besonders bevorzugt handelt es sich um einen Kohlenwasserstoff mit 5 C-Atomen oder um eine Mischung, die einen Kohlenwasserstoff mit 5 C-Atomen umfasst. Insbesondere bevorzugt handelt es sich bei dem Kohlenwasserstoff mit 5 C-Atomen um n-Pentan, iso-Pentan, Cyclopentan, oder eine Mischung aus zwei oder drei der genannten, also eine Mischung aus n-Pentan und iso-Pentan, n-Pentan und Cyclopentan, iso-Pentan und Cyclopentan oder n-Pentan, iso-Pentan und Cyclopentan. Am meisten bevorzugt handelt es sich bei dem Co-Treibmittel um Cyclopentan.

In einer weiteren Ausführungsform umfasst das halogenierte Olefin wenigstens zwei halogenierte Olefine.

In einer weiteren bevorzugten Ausführungsform umfasst das halogenierte Olefin ein fluoriertes Olefin oder mehrere fluorierte Olefine.

Besonders bevorzugt ist eine Ausführungsform, in der das halogenierte Olefin eine Mischung von cis-1,1,1,4,4,4-Hexafluor-2-buten und trans-1,1,1,4,4,4-Hexafluor-2-buten umfasst, insbesondere in einem Verhältnis von 10:90 bis 90:10, 20:80 bis 80:20, 30:70 bis 70:30, 40:60 bis 60:40 oder 45:55 bis 55:45.

Weiterhin besonders bevorzugt ist eine Ausführungsform, in der das halogenierte Olefin eine Mischung von cis-1,1,1,4,4,4-Hexafluor-2-buten und trans-1,1,1,4,4,4-Hexafluor-2-buten, insbesondere in einem Verhältnis von 10:90 bis 90:10, 20:80 bis 80:20, 30:70 bis 70:30, 40:60 bis 60:40 oder 45:55 bis 55:45 umfasst, und das Co-Treibmittel Cyclopentan umfasst; oder wobei das halogenierte Olefin aus einer Mischung von cis-1,1,1,4,4,4-Hexafluor-2-buten und trans-1,1,1,4,4,4-Hexafluor-2-buten, insbesondere in einem Verhältnis von 10:90 bis 90:10, 20:80 bis 80:20, 30:70 bis 70:30, 40:60 bis 60:40 oder 45:55 bis 55:45 besteht, und das Co-Treibmittel aus Cyclopentan besteht.

Bei der Verbindung B1 mit wenigstens zwei gegenüber Isocyanaten reaktiven Wasserstoffatomen handelt es sich um eine dem Fachmann grundsätzlich bekannte Verbindung bzw. eine Mischung aus dem Fachmann grundsätzlich bekannter Verbindungen. Beispiele für B1 sind Polyetherpolyole, Polyesterpolyole, Polyetheresterpolyole, Polycarbonatpolyole und Polyethercarbonatpolyole.

Bei den Polyetherpolyolen handelt es sich um die dem Fachmann bekannten, in der Polyurethan/Polyisocyanuratsynthese einsetzbaren Polyetherpolyole oder Mischungen aus unterschiedlichen Polyetherpolyolen. Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen oder deren Derivate sind zur Herstellung dieser Polyetheresterpolyole geeignet. Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung von Reaktionsprodukten, die durch die Umsetzung von organischen Dicarbonsäuren und deren Derivaten sowie Komponenten mit Zerewitinoff-aktiven Wasserstoffen erhalten werden, hergestellt werden.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit $CO_2$ erhältlich.

Statt oder zusätzlich zu reinen Polycarbonatdiolen können auch Polyethercarbonatpolyole eingesetzt werden, welche beispielsweise durch Copolymerisation einer Starterverbindung mit Alkylenoxiden und $CO_2$ erhältlich sind.

Weiterhin kann B1 auch niedermolekulare gegenüber Isocyanaten reaktive Verbindungen enthalten, insbesondere können di- oder trifunktionelle Amine und Alkohole, mit Molmassen Mn kleiner als 400 g/mol zum Einsatz kommen.

Neben den oben beschriebenen Polyolen und gegenüber Isocyanaten reaktiven Verbindungen können in B1 auch Graft-Polyole, Polyamine, Polyaminoalkohole und Polythiole enthalten sein.

Gegenstand der Erfindung ist auch ein Verfahren zur Herstellung von Polyurethanschaumstoffen umfassend die Schritte

    i) Bereitstellen

        a. einer Isocyanatkomponente A umfassend wenigstens ein Polyisocyanat,

        b. einer erfindungsgemäßen Zusammensetzung B , sowie

        c. gegebenenfalls einer Hilfs- und/oder Zusatzkomponente C umfassend wenigstens einen Hilfs- und/oder einen Zusatzstoff,

    ii) Vermischen der in i) bereitgestellten A und B sowie gegebenenfalls C, um eine Mischung zu erhalten,

    iii) Reagierenlassen der in ii) erhaltenen Mischung, um einen Polyurethanschaumstoff zu erhalten.

Bei der Isocyanatkomponente A handelt es sich um eine dem Fachmann an sich bekannte Komponente, die wenigstens ein Polyisocyanat umfasst. Auch solche Polyisocyanate sind dem Fachmann grundsätzlich bekannt.

Beispiele solcher Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(isocyanatocyclohexyl)methane) oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenylpolymethylen-polyisocyanate, d.h. Gemische der höherkernigen Homologen des Diphenylmethylen-diisocyanates, welche eine NCO - Funktionalität f > 2 aufweisen und folgende Strukturformel aufweisen: C15H10N2O2 [C8H5NO]n, wobei n = ganze Zahl > 0 ist.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur mit eingesetzt werden.

Statt oder zusätzlich zu den oben genannten Polyisocyanaten können auch geeignete NCO-Präpolymere als Isocyanatkomponente A eingesetzt werden. Die Präpolymere sind herstellbar durch Umsetzung eines oder mehrerer der oben genannten Polyisocyanate mit einer oder mehreren der oben genannten gegenüber Isocyanaten reaktiven Verbindungen.

Die gegebenenfalls eingesetzte Hilfs- und/oder Zusatzkomponente C kann Katalysatoren umfassen. Als Katalysatoren werden üblicherweise Verbindungen verwendet, welche die Reaktion der gegenüber Isocyanaten reaktiven Gruppen mit den Isocyanatgruppen beschleunigen. Weitere verwendbare Hilfs- und/oder Zusatzmittel umfassen beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Gegenstand der Erfindung ist schließlich die Verwendung einer erfindungsgemäßen gegenüber Isocyanaten reaktiven Zusammensetzung B zur Herstellung von Polyurethanschaumstoffen.

Die Erfindung wird durch die folgenden Beispiele weiter erläutert, nicht aber in ihrem Schutzumfang eingeschränkt.

Verwendete Materialien:

| | |
|---|---|
| Polyolmischung: | Mischung aus Polyetherpolyolen mit einer zahlenmittleren Hydroxylzahl von 435 bis 445 mg KOH/g und einer zahlenmittleren Funktionalität von 4.0 bis 5.0 basierend auf der Alkoxylierung von aromatischen Aminen bzw. von Mischungen aus Sacchariden und Alkoholen geringen Molekulargewichts |
| Katalysatoren: | Desmorapid PV, Polycat 41, PC CAT NP30, Desmorapid 726B (Aminkatalysatoren) |
| Stabilisator: | Tegostab B84205 (Silikonstabilisator) |
| Halogeniertes Olefin 1: | Gemisch aus 50% cis-1,1,1,4,4,4-Hexafluor-2-buten und 50% trans-1,1,1,4,4,4-Hexafluor-2-buten |
| Co-Treibmittel 1: | Cyclopentan |
| Apparatur: | in einen Immersionsthermostaten tauchbare Phasengleichgewichtszelle ("Zelle") mit einem Zellvolumen von 349,91 ml, ausgestattet mit einem Begasungsrührer, einem Drucksensor, einem PT100 Temperatursensor, einem Begasungs- und einem Entgasungsventil. |

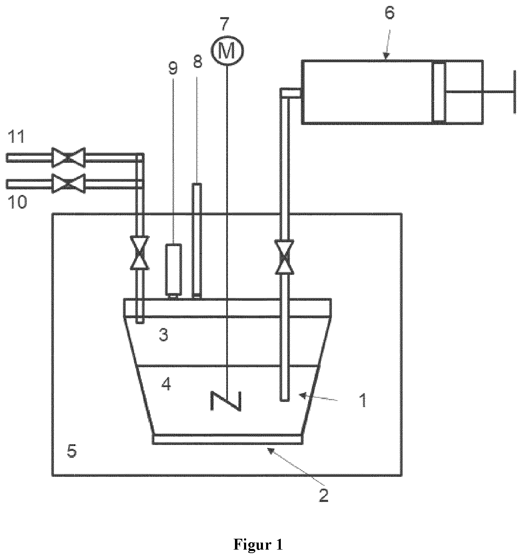

Der Versuchsaufbau ist in Figur 1 genauer dargestellt. Hierbei bezeichnen die Bezugszeichen:

1: Gegenüber Isocyanaten reaktive Komposition, die im Laufe des Experiments mit Treibmittel versetzt wird
2: Phasengleichgewichtszelle
3: Gasphase
4: Flüssige Phase
5: Heizmedium des Immersionsthermostaten
6: Spindelpresse gefüllt mit Treibmittel
7: Begasungsrührer
8: PT100 Temperatursensor
9: Drucksensor
10: Entgasungsventil
11: Begasungsventil

Durchführung:
Aus der genannten Polyolmischung, den Katalysatoren und dem Stabilisator wurde eine gegenüber Isocyanaten reaktive Komposition 1 (im Folgenden: Komposition 1) hergestellt, die sich zur Produktion von zur Isolierung geeigneten Polyurethanhartschaumstoffen eignet.

Nach dem Befüllen der Zelle mit 214 - 218 g Komposition 1 wurde die Zelle in einen Immersionsthermostaten getaucht. Die Probe wurde mehrfach durch Anlegen eines Vakuums über das Vakuumrohr entgast. Bei einer Thermostattemperatur von 25 °C wurde das Treibmittel zur Komposition 1 in die Zelle gegeben, wobei nach jeder Zugabe wenigstens 30 min gewartet wurde, so dass sich ein konstanter Zellinnendruck einstellen konnte. Die Menge an gelöstem Treibmittel wurde an Hand der gemessenen Treibmittelpartialdrücke, des bekannten pVT (Druck-Volumen-Temperatur)-Verhaltens der Treibmittel (Annahme idealen Gases für Hexafluor-2-buten, Berechnung mittels der Software *FluidCal* der Ruhr-Universität Bochum für Cyclopentan) und der bekannten Probenzusammensetzung ($m_{Komposition\ 1}$, $m_{Treibmittel}$) unter der Annahme errechnet, dass die Gasphase ausschließlich das oder die jeweiligen verwendeten Treibmittel enthielt:

$$V_{Gas} = V_{Zelle} - V_{Flüssigphase} = V_{Zelle} - \frac{m_{Flüssigphase}}{\rho_{Flüssigphase}} \qquad \text{Gleichung 1}$$

$$n^{Treibmittel}_{Gas} = \frac{p_{Zelle} V_{Gas}}{R T_{Zelle}} \qquad \text{Gleichung 2}$$

$$n^{Treibmittel}_{Flüssigphase} = n^{Treibmittel}_{Gesamt} - n^{Treibmittel}_{Gas} \qquad \text{Gleichung 3}$$

$$w^{Treibmittel}_{Flüssigphase} = \frac{n^{Treibmittel}_{Flüssigphase} \cdot M^{Treibmittel}}{n^{Treibmittel}_{Flüssigphase} \cdot M^{Treibmittel} + m^{Polyol}} \qquad \text{Gleichung 4}$$

Hierbei stehen die Abkürzungen für die folgenden Parameter:

$V_{Zelle}$:      Volumen der Zelle - bekannt

$m_{Flüssigphase}$:      Masse der Flüssigphase - bekannt (bzw. wird iterativ berechnet, da sich Treibmittel ebenfalls in der Flüssigphase löst).

$\rho_{Flüssigphase}$:      Dichte der Flüssigphase - bekannt (Annahme: gelöstes Treibmittel verändert die Dichte nicht)

$V_{Gas}$:      Volumen des Gasraums - wird berechnet über Gleichung 1

$p_{Zelle}$:      Druck in der Zelle - Messwert

$T_{Zelle}$:      Temperatur in Zelle - Messwert

R:      ideale Gaskonstante - bekannt

$n^{Treibmittel}_{Gas}$:      Stoffmenge des Treibmittels in der Gasphase - wird berechnet über Gleichung 2

$n^{Treibmittel}_{Gesam}$:      Gesamte Stoffmenge des Treibmittels in der Zelle - ist bekannt über Dosierung mit Spindelpresse

$n^{Treibmittel}_{Flüssigphase}$:      Stoffmenge des Treibmittels in der Flüssigphase - wird berechnet über Gleichung 3

$M^{Treibmittel}$:      Molmasse des Treibmittels - bekannt

$m^{Polyol}$:      Masse der Komposition - bekannt (Einwaage)

$w^{Treibmittel}_{Flüssigphase}$:      Löslichkeit des Treibmittels in der Flüssigphase - wird berechnet über Gleichung 4

Im Falle von Cyclopentan wurde die Stoffmenge in der Gasphase $n^{Treibmittel}_{Gas}$ mittels der Software *FluidCal* anstelle mittels Gleichung 2 bestimmt.

Es wurden die maximalen Löslichkeiten des halogenierten Olefins, des Co-Treibmittels, sowie eines 50:50 Gew.-%-Gemischs von halogeniertem Olefin und Co-Treibmittel, jeweils in Komposition 1, bestimmt.

Bei Durchführung der Bestimmung der maximalen Löslichkeit des Halogenierten Olefins 1 wurden kleine Portionen Halogeniertes Olefin 1 zur vorgelegten Komposition 1 in die Zelle gegeben, so dass sich die Gewichtsanteile des Halogenierten Olefins 1 gemäß Tabelle 1 ergaben.

Bei Durchführung der Bestimmung der maximalen Löslichkeit des Co-Treibmittels 1 wurden kleine Portionen Co-Treibmittel 1 zur vorgelegten Komposition 1 in die Zelle gegeben, so dass sich die Gewichtsanteile des Co-Treibmittels 1 gemäß Tabelle 2 ergaben.

Bei Durchführung der Bestimmung der maximalen Löslichkeit der Mischung aus Halogeniertem Olefin 1 und Co-Treibmittel 1 wurden abwechselnd kleine Portionen Halogeniertes Olefin 1 und Co-Treibmittel 1 zur vorgelegten Komposition 1 in die Zelle gegeben, so dass sich die Gewichtsanteile der Treibmittelmischung gemäß Tabelle 3 ergaben.

**Tabelle 1: Bestimmung der maximalen Löslichkeit des halogenierten Olefins 1 in Komposition 1 bei 25 °C**

| Anteil Treibmittel [Gew.-%] | Beobachtung |
|---|---|
| 0,000 | eine flüssige Phase, keine Separation |
| 0,933 | eine flüssige Phase, keine Separation |
| 2,215 | eine flüssige Phase, keine Separation |
| 3,591 | eine flüssige Phase, keine Separation |
| 5,534 | eine flüssige Phase, keine Separation |
| 7,502 | eine flüssige Phase, keine Separation |
| 11,321 | eine flüssige Phase, keine Separation |
| 12,605 | eine flüssige Phase, keine Separation |
| 14,066 | eine flüssige Phase, keine Separation |
| 15,499 | eine flüssige Phase, keine Separation |
| 18,666 | eine flüssige Phase, keine Separation |
| 20,689 | eine flüssige Phase, keine Separation |
| 24,508 | Trübung, Separation in zwei flüssige Phasen |

**Tabelle 2: Bestimmung der maximalen Löslichkeit des Co-Treibmittels 1 in Komposition 1 bei 25 °C**

| Anteil Treibmittel [Gew.-%] | Beobachtung |
|---|---|
| 0,000 | eine flüssige Phase, keine Separation |
| 3,485 | eine flüssige Phase, keine Separation |
| 6,703 | eine flüssige Phase, keine Separation |
| 10,526 | eine flüssige Phase, keine Separation |
| 14,106 | eine flüssige Phase, keine Separation |
| 17,359 | eine flüssige Phase, keine Separation |
| 20,847 | Trübung, Separation in zwei flüssige Phasen |

**Tabelle 3: Bestimmung der maximalen Löslichkeit des Gemischs aus halogeniertem Olefin 1 und Co-Treibmittel 1 in Komposition 1 bei 25 °C**

| Anteil Treibmittel [Gew.-%] | Beobachtung |
|---|---|
| 0,000 | eine flüssige Phase, keine Separation |
| 3,693 | eine flüssige Phase, keine Separation |
| 7,154 | eine flüssige Phase, keine Separation |
| 10,992 | eine flüssige Phase, keine Separation |
| 14,049 | eine flüssige Phase, keine Separation |
| 17,711 | eine flüssige Phase, keine Separation |
| 21,048 | eine flüssige Phase, keine Separation |

(fortgesetzt)

| Anteil Treibmittel [Gew.-%] | Beobachtung |
|---|---|
| 24,451 | eine flüssige Phase, keine Separation |
| 29,797 | eine flüssige Phase, keine Separation |
| 34,498 | eine flüssige Phase, keine Separation |

Aus der Bestimmung der maximalen Löslichkeiten des halogenierten Olefins 1, des Co-Treibmittels 1 und des Gemischs aus halogeniertem Olefin 1 und Co-Treibmittel 1 in Komposition 1 lassen sich die maximale Löslichkeiten bestimmen:

$L_{HalO,25}$ beträgt höchstens weniger als 24,508 Gew.-%, $L_{CoT1,25}$ beträgt höchstens weniger als 20,847 Gew.-%, $L_{HalO1+CoT1,25}$ beträgt mindestens 34,498 Gew.-%.

Es wird überraschenderweise deutlich, dass die maximale Löslichkeit des Treibmittelgemischs deutlich die maximale Löslichkeit von halogeniertem Olefin 1 allein und Co-Treibmittel 1 allein übersteigt, nämlich wenigstens um einen Faktor 34,498/24,508 = 1,4076.

**Patentansprüche**

1.   Gegenüber Isocyanaten reaktive Zusammensetzung B zur Herstellung von Polyurethanschaumstoffen umfassend

- eine Verbindung B1 mit wenigstens zwei gegenüber Isocyanaten reaktiven Wasserstoffatomen
- ein Treibmittelgemisch B2 umfassend

i. ein halogeniertes Olefin mit einer maximalen Löslichkeit in B bei einer Temperatur von 25 °C von $L_{HalO25}$,
ii. ein Co-Treibmittel mit einer maximalen Löslichkeit in B bei einer Temperatur von 25 °C von $L_{CoT25}$, sowie
iii. gegebenenfalls weitere Treibmittel B2n mit jeweils maximalen Löslichkeiten in B bei einer Temperatur von 25 °C von $L_{B2n25}$,

wobei der Massenanteil des Treibmittelgemischs B2 an der Zusammensetzung B bei einer Temperatur von 25 °C größer ist als der Maximalwert der maximalen Löslichkeiten bei einer Temperatur von 25 °C des halogenierten Olefins, des Co-Treibmittels sowie gegebenenfalls der weiteren Treibmittel B2n.

2.   Gegenüber Isocyanaten reaktive Zusammensetzung B gemäß Anspruch 1, wobei der Massenanteil des halogenierten Olefins und des Co-Treibmittels an dem Treibmittelgemisch B2 wenigstens 50%, bevorzugt wenigstens 70%, mehr bevorzugt wenigstens 90% beträgt.

3.   Gegenüber Isocyanaten reaktive Zusammensetzung B gemäß Anspruch 1 oder 2, wobei das Verhältnis der Massen des halogenierten Olefins $m_{HalO}$ und des Co-Treibmittels $m_{CoT}$ im Treibmittelgemisch B2 $m_{HalO}:m_{CoT}$ = 1:10 bis 10:1, vorzugsweise $m_{HalO}:m_{CoT}$ = 1:5 bis 5:1, mehr bevorzugt $m_{HalO}:m_{CoT}$ =1:3 bis 3:1 beträgt.

4.   Gegenüber Isocyanaten reaktive Zusammensetzung B gemäß einem der Ansprüche 1 bis 3, wobei das Co-Treibmittel ein Kohlenwasserstoff oder eine Mischung aus Kohlenwasserstoffen ist.

5.   Gegenüber Isocyanaten reaktive Zusammensetzung B gemäß einem der Ansprüche 1 bis 4, wobei das Co-Treibmittel ein Kohlenwasserstoff mit 4, 5 oder 6 C-Atomen oder eine Mischung aus Kohlenwasserstoffen mit 4, 5 oder 6 C-Atomen ist.

6.   Gegenüber Isocyanaten reaktive Zusammensetzung B gemäß einem der Ansprüche 1 bis 5, wobei das Co-Treibmittel einen Kohlenwasserstoff mit 5 C-Atomen umfasst.

7.   Gegenüber Isocyanaten reaktive Zusammensetzung B gemäß einem der Ansprüche 1 bis 6, wobei das Co-Treibmittel n-Pentan, iso-Pentan, Cyclopentan oder eine Mischung aus zwei oder drei der genannten n-Pentan, iso-Pentan und Cyclopentan umfasst.

8.   Gegenüber Isocyanaten reaktive Zusammensetzung B gemäß einem der Ansprüche 1 bis 7, wobei das halogenierte Olefin wenigstens zwei halogenierte Olefinen umfasst.

9. Gegenüber Isocyanaten reaktive Zusammensetzung B gemäß einem der Ansprüche 1 bis 8, wobei das halogenierte Olefin wenigstens ein fluoriertes Olefin umfasst.

10. Gegenüber Isocyanaten reaktive Zusammensetzung B gemäß einem der Ansprüche 1 bis 9, wobei das halogenierte Olefin cis-1,1,1,4,4,4-Hexafluor-2-buten und/oder trans-1,1,1,4,4,4-Hexafluor-2-buten umfasst.

11. Gegenüber Isocyanaten reaktive Zusammensetzung B gemäß einem der Ansprüche 1 bis 10, wobei das Co-Treibmittel Cyclopentan und wobei das halogenierte Olefin cis-1,1,1,4,4,4-Hexafluor-2-buten und trans-1,1,1,4,4,4-Hexafluor-2-buten umfasst.

12. Gegenüber Isocyanaten reaktive Zusammensetzung B gemäß einem der Ansprüche 1 bis 11, wobei der Massenanteil des Treibmittelgemischs B2 an der Zusammensetzung B bei einer Temperatur von 25 °C um einen Faktor von wenigstens 1,1, bevorzugt 1,2, mehr bevorzugt 1,3 größer ist als der Maximalwert der maximalen Löslichkeiten bei einer Temperatur von 25 °C des halogenierten Olefins, des Co-Treibmittels sowie gegebenenfalls der weiteren Treibmittel B2n.

13. Verfahren zur Herstellung von Polyurethanschaumstoffen umfassend die Schritte

    i) Bereitstellen

       a. einer Isocyanatkomponente A umfassend wenigstens ein Polyisocyanat,
       b. einer gegenüber Isocyanaten reaktiven Zusammensetzung B gemäß einem der Ansprüche 1 bis 12, sowie
       c. gegebenenfalls einer Hilfs- und/oder Zusatzkomponente C umfassend wenigstens einen Hilfs- und/oder einen Zusatzstoff,

    ii) Vermischen der in i) bereitgestellten A und B sowie gegebenenfalls C, um eine Mischung zu erhalten,
    iii) Reagieren lassen der in ii) erhaltenen Mischung, um einen Polyurethanschaumstoff zu erhalten.

14. Verwendung einer gegenüber Isocyanaten reaktiven Zusammensetzung B gemäß einem der Ansprüche 1 bis 12 zur Herstellung von Polyurethanschaumstoffen.

**Figur 1**

**Europäisches Patentamt**
**European Patent Office**
**Office européen des brevets**

# EUROPÄISCHER RECHERCHENBERICHT

Nummer der Anmeldung

EP 21 21 1188

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/210869 A1 (WYSONG ERNEST BYRON [US] ET AL) 27. Juli 2017 (2017-07-27)<br><br>* Seite 1, Absatz [0002]; Seiten 4-5, Beispiele 1-2, Absatze [0046-60], Tabelle 2-5; Seite 6, Ansprüche 1-10 *<br>----- | 1-3, 8-10, 12-14 | INV.<br>C08G18/18<br>C08G18/48<br>C08G18/72<br>C08J9/14<br>C08K5/54<br>C08L75/04<br>C08L75/08 |
| X | US 2015/210818 A1 (LOH GARY [US]) 30. Juli 2015 (2015-07-30)<br>* Seite 5, Absatz 48-50; Ansprüche 1-5, 11,12; Beispiele 7-8; Tabellen 7-8 *<br>----- | 1-10, 12-14 | ADD.<br>C08G101/00 |
| X | US 2021/238378 A1 (WYSONG ERNEST BYRON [US]) 5. August 2021 (2021-08-05)<br>* Seite 19, Beispiel 29, Tabelle 16; Seiten 24-25, Ansprüche 1-12, 36-39 *<br>----- | 1-14 | |

**RECHERCHIERTE SACHGEBIETE (IPC)**

C08G
C08J
C08K
C08L

Der vorliegende Recherchenbericht wurde für alle Patentansprüche erstellt

| Recherchenort | Abschlußdatum der Recherche | Prüfer |
|---|---|---|
| München | 12. Mai 2022 | Stefaniu, Cristina |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 1188

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2022

| Im Recherchenbericht angeführtes Patentdokument | Datum der Veröffentlichung | Mitglied(er) der Patentfamilie | Datum der Veröffentlichung |
|---|---|---|---|
| US 2017210869 A1 | 27-07-2017 | CA 3010359 A1 | 27-07-2017 |
| | | CN 108473710 A | 31-08-2018 |
| | | EP 3405516 A1 | 28-11-2018 |
| | | ES 2909340 T3 | 06-05-2022 |
| | | JP 6914264 B2 | 04-08-2021 |
| | | JP 2019507217 A | 14-03-2019 |
| | | KR 20180103911 A | 19-09-2018 |
| | | US 2017210869 A1 | 27-07-2017 |
| | | WO 2017127289 A1 | 27-07-2017 |
| US 2015210818 A1 | 30-07-2015 | CA 2937070 A1 | 30-07-2015 |
| | | CN 106062054 A | 26-10-2016 |
| | | JP 2017508036 A | 23-03-2017 |
| | | KR 20160113128 A | 28-09-2016 |
| | | US 2015210818 A1 | 30-07-2015 |
| | | WO 2015112849 A1 | 30-07-2015 |
| US 2021238378 A1 | 05-08-2021 | CA 3095635 A1 | 07-11-2019 |
| | | CN 112074564 A | 11-12-2020 |
| | | EP 3788098 A1 | 10-03-2021 |
| | | JP 2021523251 A | 02-09-2021 |
| | | KR 20210008372 A | 21-01-2021 |
| | | US 2021238378 A1 | 05-08-2021 |
| | | WO 2019213463 A1 | 07-11-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2007002703 A
- WO 2013081809 A
- AU 2016200022